# EUROPEAN PATENT APPLICATION

(11) **EP 0 884 080 A2**
(43) Date of publication of application: **16.12.1998**
(21) Application number: 98201952.3
(22) Date of filing: 11.06.1998
(51) Int. Cl.: B01D 1/18

(54) **Method and apparatus for drying atomized liquid concentrates**

(30) Priority: 11.06.1997 NL 1006284
(71) Applicant: Slob, Wouter, 8414 LP Nieuwehorne (NL)
(72) Inventor: Slob, Wouter, 8414 LP Nieuwehorne (NL)
(74) Representative: de Bruijn, Leendert C.

(57) **Abstract**

The invention relates to the drying of concentrate atomized in whatever manner in a first hot drying gas, the quantity of the concentrate being just sufficient to allow the evaporation of liquid of the total spray from the initial moisture content to the critical moisture content level of the total spray to be accommodated.

The use of the invention is found to allow, in commercial-capacity multiphase dryers, a denaturation-sensitive product to be dried using a first drying gas temperature of 500°C, instead of the customary maximum temperature of 240°C, without this very high temperature being found to affect the quality of such products.

To prevent small particles that have horizontally fully decelerated from being drawn towards the axis of the drying-gas column, an adjustable radial flow direction is imparted to the first drying gas introduced, said radial flow preventing the smallest particles in the spray from being drawn towards the axis of the drying gas.

The same radial force moreover generates a secondary gas stream which can advantageously serve as a second mixing layer for drying of product having moisture content levels between the critical moisture content level and the equilibrium moisture content level in multiphase dryers.

## Description

The invention relates to a method for preparing powders, such as powdered milk, which involves atomizing the starting material in the form of a liquid concentrate in whatever manner in a first hot drying gas and drying it to produce particles having a moisture content which is equal or virtually equal to the Critical Moisture Content of the separate particles, the particles then being subjected to further drying in a mixed gas derived from a second drying gas and the spent first drying gas. The invention also relates to an apparatus for this method for drying atomized particles to their Critical Moisture Content and further to or virtually to their Equilibrium Moisture Content.

The method and the apparatus are restricted to that part or section of a drying method or drying apparatus, where the drying particles are either subjected to the atomization trajectory or to an airflow directly thereafter, generally known apparatuses thereby being provided for multiphase drying with a virtual uniform product moisture content for a second drying process.

The invention is of exceptional importance for the production of high-quality product, still allowing a very high inlet temperature of the first drying gas to be employed.

The invention also proves highly advantageous in terms of energetics.

This is because the invention allows the use of:
1. A first drying gas having an exceptionally high temperature which, with this method, surprisingly does not adversely affect product quality.
2. A second drying gas having an exceptionally low temperature, which partially mixes, in interfaces, with the spent first drying gas. The exceptionally low temperature of this drying gas particularly lends itself to energy savings by virtue of ready recovery of low-temperature waste heat from the associated plant such as e.g. of an upstream evaporation installation or combined heat and power.

The invention comprises specific measures for classifying a concentrate atomized in whatever manner in a first drying gas, an adjustment of the flow of the first drying gas causing a change in the flow pattern of the secondary drying gas, in such a way that the most finely atomized particles are not drawn towards the axis of the atomization cone or atomization cones but at an early stage arrive in the specially tailored secondary drying gas at, or virtually at, their corresponding specific Critical Moisture Content, the drying afterwards proceeding sufficiently slowly to prevent or virtually prevent the evaporation flux from being determined by diffusion.

Said greatly delayed drying maintains the wet character of the surface of the particle and thus prevents the particle still having a high moisture content from acquiring a dry shell.

The largest particles, however, remain in the first drying gas until they too have reached their much higher CMC, or virtually their much higher CMC, after which they are further dried sufficiently slowly in another mixing layer to prevent them too from ending up in the Penetration Period or virtually in the Penetration Period.

Mixing of a concentrate, atomized in whatever manner, in a hot drying gas for the purpose of drying concentrates, is assumed to be generally known. Equipment for this purpose is used in spray dryers.

The state of the art comprises the following main categories of spray-drying:

**Single-phase drying**, which involves the concentrate, atomized in whatever manner, being dried from the atomization solids content as far as the commercially desired final solids content by means of one type of drying gas, characterized in that this gas supplies the energy requirement of the total liquid-phase evaporation by means of a drop in temperature, while said drying gas must moreover be able to absorb the vapour of the liquid.

In the case of a high inlet temperature of the drying gas, the evaporation flux will decrease markedly if the product has moisture contents between CMC and EMC, owing to shells forming at the surface of the drying particle, as a result of which the particle temperature increases sharply from the wet-bulb temperature to the dry-bulb temperature of the drying gas.

Thermal denaturation due to a residence time at their temperature at the moisture content in the particle where the product is particularly sensitive to thermal denaturation is not a figment of imagination, unless the evaporation flux is kept low by means of a low inlet temperature of the drying gas. The limit is about 180°C, while at the same time very fine atomization of the concentrate is effected.

The novel invention is not intended for use in this type of dryer.

**Two-phase drying**, which involves the concentrate, atomized in whatever manner, being dried to approximately its Equilibrium Moisture Content by means of one type of drying gas, while the drying from its EMC to the desired final moisture content makes use of a fresh drying gas, prepared specially for this purpose, in a special dryer section, e.g. a so-called fluid bed. The drying gas exhaust streams are not merged in the drying chamber.

In the first drying gas, the product is dried to far beyond the Critical Moisture Content, as a result of which the inlet temperature of the first drying gas is again limited to prevent shells from forming and consequent damage to the product. Here too, very fine atomization is inevitably used.

The temperature limit of the inlet of the first drying gas is about 210°C.

Atomization pressures of 240 bar are generally used.

The novel invention is not intended for use in this type of dryer.

**Three-phase drying**, which involves the concentrate, atomized in whatever manner, being dried in a first drying gas in which the product dries to, or virtually to, its Critical Moisture Content, and the product then being further dried to, or virtually to, its Equilibrium Moisture Content in a second drying gas especially suitable for slowly drying the product having those moisture contents.

Drying of the product from the Equilibrium Moisture Content to its commercial final moisture content takes place subsequently in a fresh drying gas.

The invention is especially designed for use in these three- or multiphase type dryers, because the invention allows particles having different diameters and dried to, or virtually to, their own specific CMC to be dried in a hot first drying gas and immediately thereafter to be removed from the first, still hot, drying gas in order to dry further up to, or virtually to, their Equilibrium Moisture Content in a subsequent drying gas, while the coarser particles continue drying in the first drying gas until they too have reached their much higher CMC.

Thanks to the invention, drying-gas temperatures of 500°C can be used, while preferably a highly viscous concentrate is atomized at a low pressure, e.g. 54% strength full-fat milk concentrate instead of 48%, and a pressure of 70 bar instead of 240 bar.

The prior art comprises a great variety of examples of these three- or multiphase spray dryers, for example:
1. Patent No. EP 0097 484. Let us refer to this type of dryer as a three-phase dryer comprising an internal-fluid bed, since a number of manufacturers are marketing dryers having virtually the same characteristics. The internal-fluid bed is the provision which allows additional time to be provided for drying from the Critical Moisture Content as far as the Equilibrium Moisture Content.
2. Patent No. EP 0446 984, the Rotacom dryer, as an example of a multiphase dryer with a provision for additional residence time in the form of a perforated belt for drying from the Critical Moisture Content as far as the Equilibrium Moisture Content.
3. Application No. 1002909, where the drying up to, or approximately up to the Critical Moisture Content is achieved by setting a time limit to the residence of the particles in the first drying gas and where again use is made of an internal-fluid bed for the ensuing drying.

In the description; "background of drying processes" it will be demonstrated that achieving the Critical Moisture Content in one type of drying gas by drying the total amount of atomized concentrate up to its theoretical mean Critical Moisture Content level is to be avoided.

The reason is that that would entail serious problems with quality as soon as the inlet temperature of the first drying gas and the amount thereof deviate from the combination that can be used with two-phase drying.

In the three patent descriptions of multiphase dryers which were given as an example, but equally in all other apparatuses of this type that are known to us, liquid concentrates are dried as far as the mean CMC and not, as is postulated as being essential in the novel invention, as far as the CMC of the individual particle, characterized in that these particles are then immediately, or virtually immediately, removed from the still hot drying gas, and the larger particles which have not yet reached their CMC undergo further drying in the first drying gas.

As far as we know, the maximum unmixed first drying gas temperature, to avoid problems with quality in the production of full-fat milk powder, is adjusted to about 220°C, except in the Rotacom dryer, where the problems have been solved with the aid of an apparatus as described for the first time in the novel invention and which allows the inlet temperature, while maintaining exceptionally good product quality, to be raised to approximately 500°C, such temperature in this case being limited by the design of the drying-gas heater and not by the product quality.

It should be noted that the need to use the novel invention does not apply to dryers having an atomization capacity of at most 400 kg/h of concentrate.

The forces for drawing inwards the finest droplets which have fully decelerated are clearly not sufficiently high in this case. When the atomization capacities were scaled up to commercial quantities, use of the novel invention proved indispensable, since even the use of multinozzle atomization, entirely unexpectedly, provided no remedy at all.

### Background of drying processes

### A. Atomization

Commercial atomizer units are marketed in a number of varieties. They produce droplets from a liquid stream.

This is much utilized for drying concentrates, since a concentrate atomized into droplets achieves a large amount of surface area with respect to its weight.

The finer the atomization, the larger the surface area will be with respect to the volume. Grateful use is made of this in spray dryers, since after all as large a contact area with the drying air as possible is desired.

There is a problem, however. The particles atomized by means of commercial atomizer units will show quite significant differences in diameter within a spray. Consequently, particle diameters of between 10 and 450 µm can easily be found within one spray. It is therefore customary in drying technology to define a spray in terms of particle size, such as D50 = that diameter at which 50% of the particles are smaller or larger than the stated diameter or e.g. Sauter mean diameter = that diameter at which 50% of the particles, in volume of the particle with respect to its surface, are smaller and 50% are larger than the stated yardstick.

Computations using these expression means has been raised to an art in dryer programs.

The mean particle size is affected by:
- Viscosity of the atomized liquid
- Type of the atomizer unit
- Energy input

The size of the particles of a spray is not the same as the size of the particles at their Critical Moisture Content.

The concentrate is atomized into particles. These particles dry up to their CMC, occupying a minimum volume.

The particles will certainly shrink by 20%, but this will of course depend on the evaporation of liquid in this first drying phase with respect to the total liquid to be evaporated.

In the first drying zone of a concentrate in a spray dryer the concentrate particle dries to its minimum size.

The smallest atomized particle thereby becomes the smallest when reaching its CMC.

Atomization of a concentrate easily gives rise to velocities of the particles of 140 m/sec.

The direction consists of a vertical, a horizontal and a small radial component.

It is now important to see what happens.

The pulse of the spray has a force kg/sec x velocity in m/sec.

The pulse of the drying air likewise has a force kg/sec x velocity.

The question is; is the particle trajectory affected by the drying gas?

Powder production per hour of 1000 kg from a concentrate having 54% sc.

The CMC of this concentrate is 67% sc at this mean particle size.

The first drying gas has an inlet temperature of 420°C and is saturated to 100% by the drying concentrate, thereby absorbing 136 g of vapour of the liquid per kg of drying gas.

The first drying gas has a vertical inlet velocity of 12 m/sec.
Concentrate pulse: 1000 x 100/54/3600 x 140 = 72
Drying gas pulse: 1000 x (100/54-100/67)/3600/0.136 x 12 = 8.8.

The particle trajectory would not be expected to be susceptible to significant alteration by adjustments in the air flow of the first drying gas, since the pulse of the concentrate is approx. 10 x greater.

This is true, but is found to hold only as long as the individual particles have a velocity.

The particles are slowed down by the viscosity of the drying gas.

The smallest particles have a much shorter atomization trajectory than the larger particles.

(Diameter effect on the formulae for the volume = weight and the surface area of a sphere).

If the novel invention is not used, the smallest particles when reaching the end of their atomization trajectory, i.e. fully decelerated, are found to be drawn towards the centre of the atomization cone, while the larger particles have not yet fully decelerated and consequently entrain an excess of drying gas in an oblique direction as seen from the axis. As a result, the vacuum in the centre deepens, which causes even more small particles to be drawn along.

An excess of fine particles at their CMC, since they reach this sooner than the time required for the deceleration distance, is therefore located in the centre, which also contains very little drying gas and which consequently will be saturated in quite a short time.

The particles in the centre therefore very rapidly stop drying and will even take up moisture again and now raise, at a very high moisture content, from the wet-bulb temperature to the dry-bulb temperature of the drying gas. This temperature may still be very high.

Such particles, arriving in one way or another in a fresh drying gas, will undergo further drying only with great difficulty and serious drop in quality.

If the inlet temperature of the drying gas is raised, said drying gas, in terms of weight, being specially tailored to drying the concentrate to its CMC, this phenomenon becomes more marked. At 400°C quantities are observed up to 35% of the total spray.

It is also the case that finer atomization promotes the phenomenon.

The novel invention is able to overcome this hitherto apparently insoluble problem and do this in such a way that it is indeed possible for drying to be carried out with very small amounts of very hot first drying gas without qualitative consequences.

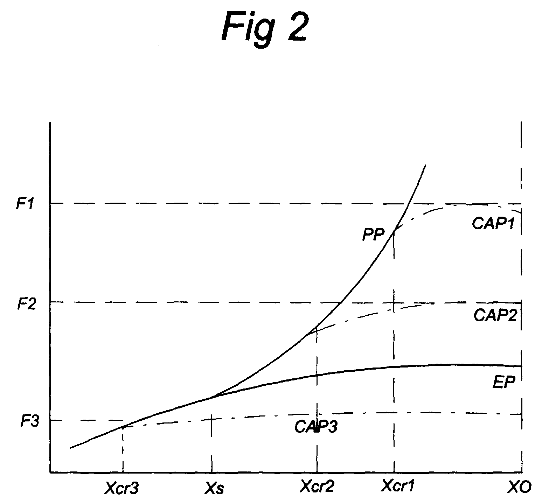

### B. Product drying curve See Figure 2

### CAP: Constant Activity Period

The first section of the drying curve, the CAP, is characterized in that the rate of evaporation depends entirely on external factors, i.e. the difference in water vapour pressure at the surface of the particle and the water vapour pressure of the drying air.

Because the boundary layer at the surface of the particle in that section of the drying curve is always moist, by definition, the migration of liquid towards the surface of the particle is higher than the possible evaporation of liquid at that surface.

Consequently, the evaporation flux depends on the product particle-independent external factors:
- particle boundary layer water vapour pressure (solely a function of the temperature of the particle),
- water vapour pressure of the drying air.

The water vapour pressure differential determines the evaporation flux. The water vapour pressure of the drying air is determined by the temperature and the absolute humidity of the drying gas and is therefore lower, the higher the initial temperature of the drying gas.

In an adiabatic system the particle temperature of a drying particle having surface liquid is equal to the wet-bulb temperature of the drying gas, as long as that particle evaporates liquid at its surface.

This temperature is related to the inlet temperature of the drying gas and its initial absolute humidity.

By definition, this section of the drying curve forms a transition with a subsequent section, once an increase in concentration no longer allows the migration of liquid in the particle at a specific evaporation flux to moisten the surface. The solids content of the particle at which this happens is referred to as the Critical Moisture Content.

It will be obvious that a change in the evaporation flux also means a change for the CMC, in particular in that a higher flux entails a higher CMC (the same migration rate brings the same amount towards the surface, where it is evaporated more rapidly and thus leaves behind a dry surface).

Whilst the higher particle temperature going hand in hand with the elevated inlet temperature of the drying gas does result in a higher migration rate of the liquid in the particle, the effect of this is much smaller than that of the greater evaporation on the change in the CMC. In the little drawing, the CMC Xcr1, associated with a drying CAP1 at an inlet temperature of e.g. 400°C is significantly different from Xcr2 associated with CAP2 at e.g. a drying gas temperature of 210°C, at least if particles having the same diameters are being considered.

Of course, the particle size likewise has a strong effect, since the migration rate is the same, but the distance over which migration is required differs significantly.

At the same drying gas temperature, F1/Xcr1 and CAP1 would be associated here with a much larger particle than F2/Xcr2/CAP2.

The smaller the particle, the sooner it will reach its CMC, but at the same time this CMC is at a much lower moisture content than that of larger particles.

This entails a very major complication.

Nevertheless, the standard procedure is that of establishing a CMC empirically and then, for an average spray at a desired drying-gas temperature, to carry out a calculation of the drying-gas variables.

Account must however be taken of the fact that this definitely does not mean that the particles will initially, but approximately, have the same moisture content or will reach their CMC at the same instant.

The finest particles will reach their CMC much sooner and will happily go on drying until they are remoistened by the drying air which has meanwhile become more humid as a result of the coarser particles drying.

From the instant when drying stops they are again vulnerable to an increase in temperature.

Again this is caused by the fact that, while drying at wet-bulb temperature, they stop drying and adopt the consequently prevailing dry-bulb temperature of the first drying gas.

The fate of fine particles dried in a drying gas together with coarse particles in a hot drying gas is indeed not one to be envied for this second reason.

It should be clear that the differences in evaporation flux and CMC, caused by a change in the inlet temperature chosen, run approximately parallel to one another in the drying curve shown. This is indicated in the drying-curve picture by the lines CAP1-CAP2 etc.

These CAP curves always terminate at the PP curve line at the instant where the migration of moisture cannot provide sufficient surface liquid for the evaporation flux associated with that drying-gas temperature, but free liquid is still present.

The evaporation flux drops sharply once the drying gas becomes saturated.

This means that possibly slightly overdried particles are given more migration time and consequently restore a moist surface when the evaporation flux decreases owing to the drying gas becoming saturated.

Indeed it is strongly to be recommended to opt for a system in which the first drying gas becomes fully or virtually saturated with evaporated liquid from drying particles, said drying particles being dried as far as their CMC.

In addition, an atomizer unit producing a spray having a uniform particle size would be necessary to allow drying as far as the CMC of the spray and therefore also of the separate particles.

Unfortunately, the prior art with respect to atomizer units is such that they form a spray having a scatter of particle diameters from 6 to 450 µm and therefore exhibit a difference, with respect to the moisture contained in the volume of the sphere, of 4/3 x pi x dia^3, and an evaporation flux difference due to surface area differences, of 4 x pi x dia^2, which causes differences in liquid weight, evaporation area, deceleration distance and CMC.

We have seen that smaller particles fully decelerated will either end up in the core or will be entrained in the spray, but in all cases, as a result of evaporation being stopped, can undergo a large increase in temperature and consequently in all cases result in a negative difference in quality, but also often prevent further drying.

It would therefore be necessary to be able to remove the smaller particles, in an amount up to about 35% of the atomized concentrate, from the spray at the instant when they have reached their relatively low CMC.

Minimum force for this is required when they have fully, or virtually fully, decelerated.

### PP: PENETRATION PERIOD

A drying particle finds itself in the PP when the migration of liquid to its surface falls behind the evaporation of liquid at this surface, while free liquid is nevertheless present.

The surface then dries out rapidly, and the shell formed as a result rapidly thickens.

Evaporation then no longer takes place in accordance with the differential vapour pressure model, but as a result of exchange of liquid-vapour concentration between the liquid vapour pressure present in the pores, in equilibrium with the product moisture, and the liquid vapour pressure present in the drying gas.

The drying gas therefore has to penetrate the pores for the purpose of drying, hence the name.

Owing to the inadequate evaporation rate, the particle undergoes a transition from the wet-bulb temperature to the dry-bulb temperature of the drying air.

The core of the particle likewise adopts this temperature.

The result is a rapid drop in the product quality owing to denaturation, since it is precisely this moisture range where denaturation rises at an accelerated rate.

Problems with insolubility and free fat in the course of the production of powders are found not to occur, in contrast with current theory, as a result of an unduly high inlet temperature or an unduly high outlet temperature of the drying air, but as a result of a high particle temperature in PP drying.

This used to be caused by the coarse particles, but with specific CAP drying of the three-phase drying system it is precisely the smallest particles that cause this.

The same problem, when the problem was caused by the large particles, used to be solved by atomizing as finely as possible and selecting a drying-air temperature at which as little shell formation as possible occurred in the course of drying the coarser particles.

An obvious answer is to atomize in such a way that no or virtually no fine particles are formed. Trials using extremely low atomization pressures with a hot drying gas were found to be unable to prevent the problem. Even a pressure which almost corresponded to nondispersion into particles proved no solution.

Distributing the concentrate over various nozzles in the drying gas did not yield the desired result either. One especially effective nozzle having a small atomization capacity did not give any problems; the commercially required concentrate stream distributed over a number of the same nozzles again was found to present the problems.

The little drawing also shows CAP3. This is possible when the particle is drying from moisture content CMC to EMC with a wet outer layer, owing to the migration of moisture exceeding the available evaporation potential. This is the case if the particle in a wet state is dried in a second mixed gas having an exceptionally low drying power until free moisture is no longer present.

Total drying of the particle of atomization concentration then does not comprise three phases, i.e. CAP, PP and EP, but only two phases, the CAP and EP, and does not move into the PP.

### EP: EQUILIBRIUM PERIOD

This period is characterized by equalization of liquid vapour pressure in the product and that of the drying gas.

The period starts at the instant where free liquid is no longer present in the particle, and continues until the commercial final moisture level is achieved.

The higher the product temperature, the lower the moisture content. A sustainedly high product temperature is found to have no effect in this drying phase.

### Description of the method of the novel invention

In the above it was demonstrated that the scatter in the particle size with commercial atomizer units leads to major problems if small amounts of hot first drying gas are used exclusively for CAP drying of the spray.

This is because the finest particles were either drawn towards the axis of the atomization cone or were entrained in the trajectory of the coarse particles and were remoistened.

We have also seen that there is little prospect of imparting to the first drying gas a force which is able to affect the droplet trajectory.

The abovementioned patent descriptions lack any indication of the problem.

We assume that the trials with the high-temperature first drying gas have either been unsuccessful or took place with a non-commercial amount of atomization liquid, less than 400 kg/h.

The abovementioned patent descriptions also lack a fundamental description of the drying-gas flow in the spray-drying section. None of the patents known to us mention a secondary gas flow as a result of the introduction of a stream of drying gas into a spray-drying section. Nevertheless, this ever-present secondary flow proves essential for a properly functioning multiphase dryer.

If a column of gas flows, in whatever way, into a nonflowing, or virtually nonflowing, gas, a portion of this gas at virtual rest is entrained with the column, vortices being formed in the interface. We refer to this as secondary gas, since the flow direction and intensity are determined by forces in the first drying gas. The gas which originally is virtually at rest supplements the entrained secondary gas.

Thus an important flow of secondary drying gas is produced in dryers.

Since this flow takes place at the boundary of the extremely important first drying-gas column, it is important to be aware of the nature of the gas.

One possibility is that, with only one type of drying-gas inlet and only one outlet of drying gas, said drying gas having absorbed all the evaporated liquid, the secondary drying gas is a more or less circulating exhaust air stream.

Another possibility, if a plurality of types of drying gas are used in one drying chamber, is that the secondary flow consists of the one or the other or a mixture of the drying gases.

In the case of a central inlet of one drying gas, this will entrain a secondary gas which is supplemented by a drying gas having a very low velocity. In the case of the Rotacom dryer this proves to be the second drying gas introduced above the perforation, and in the case of internal-fluid bed dryers the total, more or less homogeneously mixed, exhaust air stream.

Besides, a plurality of centred air inlets can be regarded as one air inlet.

In principle, therefore, close to the first drying-gas column a suitable drying gas is present for drying particles from their CMC, as this gas has a low temperature and an elevated RH.

Surprisingly, the pulse calculation notwithstanding, it does indeed prove possible to separate fine particles from a spray and cause them to be incorporated by the secondary gas stream, while the coarser particles continue their drying path in the first drying gas.

To this end, we impart to the first drying gas a radial pulse at the instant of inflow into the dryer section.

This pulse can be generated by a small amount of energy. In the case of a 1000 kg powder tower having a first drying-gas temperature of 400°C, 1.5 kW proves sufficient.

The radial pulse now causes vorticity of the first drying-gas column which in turn drags along, in the form of a spiral, the secondary gas stream.

As long as the particles have not fully decelerated, their atomization trajectory will not, or virtually not, be affected, but once they have fully decelerated in the horizontal direction, the vorticity in the column and their density with respect to the drying gas will cause them to reach the outside of the column. The particles which have fully decelerated are thus, in a very simple and energetically advantageous manner, prevented from being drawn towards the axis of the column.

The outside of the column exchanges liquid vapour with the secondary drying gas.

This means that the fine particles continue to dry, even though they have reached their CMC, since the first drying gas at this location will always be drier than further into the column.

Thus the vorticity prevents the problems which occur when a spray is dried in a small amount of first drying gas of very high temperature, since the vorticity prevents:
- the fine particles which have fully decelerated from being drawn into the axis of the column, where, owing to their high moisture content partly caused by remoistening, they will be denatured owing to the high dry-bulb temperature still prevailing there.
- the fine particles which have fully decelerated and which escape from the air stream prevailing towards the centre of the column and are therefore entrained in the trajectory of the coarser particles which have not yet fully decelerated, are in an environment having a much lower RH, liquid vapour after all being exchanged towards the secondary gas. As a result, the fine particles can dry slowly to beyond their CMC and remain at the now incidentally slightly lower wet-bulb temperature of the first drying gas.

For that matter, not only liquid vapour transfer takes place from the first drying gas to the secondary drying gas in the mixing plane A-A'.

What is also found is that large quantities of fines which have fully decelerated are incorporated in the secondary gas spiralling alongside, which makes it necessary for the variables of this secondary drying gas to be controllable.

### Description of an apparatus of the novel invention

### Concentrate requirements

The concentrate to be atomized is preferably brought to a temperature which is equal, or virtually equal, to the wet-bulb temperature of the first drying gas, before the concentrate is atomized in whatever manner.

**This ensures that:**
- The product is pasteurized.
- It is not necessary for the drying air to bring the product to its wet-bulb temperature, as required for surface evaporation.
- Consequently the product achieves a minimum atomization viscosity.

Since a coarsely atomized particle is advantageous in the novel method, a higher viscosity of the concentrate than has been customary hitherto is permitted.

The atomizer unit only requires minimal atomization energy.

### First step, the CAP

The concentrate (1) to be dried is atomized cocurrently in whatever manner in a hot drying gas in the atomizing dryer section (2).

The inlet of the drying gas (3) is of a radial type whose radial rotation force can be adjusted in a controlled manner in some way or other.

The vertical velocity of the drying gas in the inlet orifice (4) will generally be between 5 and 20 m/sec.

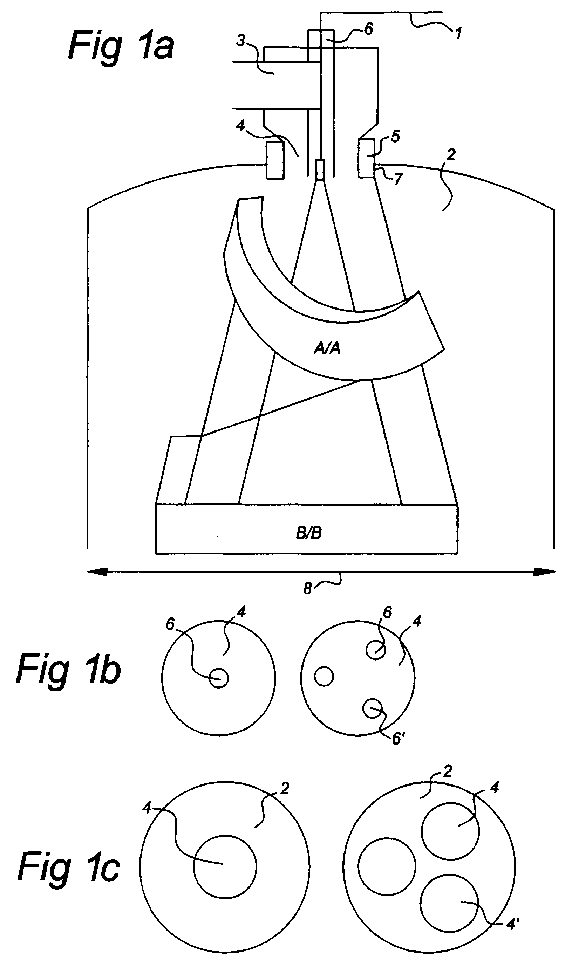

Use can be made of the various types of atomizer units, with the option of both single and a plurality of atomizer units (10) (Figure 1B) being used in said inlet.

The dryer can be provided with a plurality of first drying-gas inlets of the above-described type (11) (Figure 1C).

The inlet of the hot drying gas should have a cooling means, both with respect to the atomizing dryer roof (5) and with respect to the atomizer unit (6).

Said inlet section is preferably recessed (7) into the dryer roof.

The dimensions of the atomizing dryer section are primarily determined by the required deceleration distance, both in a horizontal (8) and in a vertical direction of the coarsest atomized particle, the diameter of the atomizing dryer being at least twice and at most 5 times the horizontal deceleration distance.

A particle fully decelerated is defined as a particle having a relative differential velocity of at most 1.5 m/sec with respect to the drying gas surrounding it.

This means that, at 120 bar and a 60 nozzle, it is necessary to reckon with a coarsest particle of 450 µm and a deceleration distance of 1100 mm, the tower diameter consequently being at least 2200 and at most 5500 mm.

The column of first drying gas is delimited by horizontal boundary face B-B', the vertical boundary face A-A', and the inlet of the drying gas in the atomizing dryer section and, in A-A' and B-B', forms a mixing zone with not necessarily identical second drying gases.

Horizontally fully decelerated or approximately fully decelerated fine particles in the first drying gas may, owing to the centrifugal effect of the rotating first drying gas in the boundary face A-A', be flung into the co-rotating secondary mixed gas present here.

The term secondary means that this drying gas does not have any flow of its own, but that this flow is caused by the first drying gas.

The term mixed gas means that this gas is formed by separate drying gases being equalized in some way or other with respect to relative humidity and temperature.

It is found to be possible to cause the evaporation of the fine particles in the mixing layer A-A' to proceed so slowly, by setting the relative humidity and temperature of the second drying gas, that the surface of the particle remains moist until all, or virtually all, the free liquid has disappeared from the particle. This has the advantage that, in addition to very low energy consumption, a qualitative advantage is also achieved.

This is because this manner of drying prevents the fine particles from moving into their PP and consequently rising from the wet-bulb to the dry-bulb temperature of the mixed gas.

The vorticity of the first drying gas is found to be maintained up to a great distance. This has the major advantage that a large portion of the subsequently decelerated particles end up in the mixing layer A-A'. Furthermore, the spirally co-rotating secondary mixed gas becomes increasingly humid, owing to having absorbed mixed gas and liquid vapour from the previously incorporated drying finest particles and as a result of the sustained exchange with the first drying gas.

The coarsest atomized particles transfer from the first drying gas into a mixed gas in layer B-B'. It proves virtually irrelevant whether this mixed gas is produced by mixing the first drying gas with a second drying gas, in this case perpendicular to, or countercurrent to the first drying gas. At this transition point the following conditions of the unmixed drying gases and product obtain:

### 1. The first drying gas and the predominantly coarsest particles, dried to their CMC, of the original spray.

The first drying gas at this point is saturated to 100% or almost 100%.

The dry-bulb and the wet-bulb temperature of the drying gas are therefore equal.

This temperature can be adjusted via the choice of the inlet temperature of the first drying gas.

The product particles have been dried as far as their CMC, or a small number of fine particles which have escaped from the centrifugal force have been remoistened.

The particles are at the wet-bulb temperature of the first drying gas and have a wet surface.

### 2. The second drying gas

The second drying gas preferably has a low drying power so that portions on their CMC that are still wet are dried as slowly as possible.

A low drying power is achieved by picking either a high RH or a low temperature or a combination of these.

Very suitably, use can be made of exhaust air from the EP drying process.

Any powder particles originating from this drying process are not detrimental, since agglomeration between these particles and particles drier than their CMC will take place.

A particle having a moisture content at, or lower than, its CMC will be sufficiently rigid to prevent undesirable, unduly large contact areas between the agglomerate particles.

The invention is limited to drying of the spray in the first drying gas and that section of the multiphase dryer where mixing layers are formed under the influence of the first drying gas.

After all, the invention is intended to make it possible multiphase dryers with a very hot first drying gas the CAP drying period of the particles and then to further dry, in a mixed gas, the selectively horizontally fully decelerated particles, thus preventing the horizontally fully decelerated particles from being drawn towards the axis of the first drying-air column and being entrained in the centre of the first drying-gas column and not drying any further, as a result of which they will increase in temperature and be denatured, while the not horizontally fully decelerated particles continue their drying path in the first drying gas.

The drying conditions of the mixed gas are predominantly determined by the conditions of the second drying gas supplied.

The second drying gas may, depending on the use of the apparatus according to the invention in a specific type of multidryer be: fresh drying gas of a specific temperature and/or humidity, and/or the total exhaust air of the drying gases used in a multiphase dryer, and/or the exhaust air of a specific drying stage of the drying process such as e.g. the equilibrium drying process.

## Claims

1. Method for preparing a spray-dried product comprising:
- atomization of a liquid concentrate in a substantially vertical direction in an atomizing dryer section by means of a distribution unit, and
- feeding a first drying gas to the atomizing dryer section via an inlet situated near the distribution unit,
characterized by imparting, to the first drying gas fed in, a radial velocity component oriented transverse to the vertical direction, as a result of which the first drying gas describes a spiral trajectory, so that relatively small particles which have a low velocity oriented transverse to the vertical direction are moved radially outwards.

2. Method according to Claim 1, characterized in that the first drying gas has a temperature of at least 240°C.

3. Method according to Claim 1 or 2, characterized in that the first drying gas, which moves along the spiral trajectory, adjoins a surrounding mixing layer, the temperature and the quantity of the first drying gas being adjusted in such a way that the first drying gas at the location of the surrounding mixing layer has a relative atmospheric humidity of between 40% and 100%.

4. Method according to any one of the preceding claims, characterized in that, by virtue of the spiral trajectory of the first drying gas, a secondary drying gas is entrained which has a relatively low liquid vapour pressure compared with the first drying gas, the boundary layer between the secondary drying gas and the first drying gas comprising a mixing layer of the first drying gas and the secondary drying gas, in which mixing layer product particles are dried from their critical moisture content to, or virtually to, their equilibrium moisture content.

5. Method according to any one of the preceding claims, characterized in that the radial velocity component of the first drying gas is introduced by means of:
- the first drying gas being fed in transversely to the vertical direction, or
- a swirler unit in or near the inlet of the first drying gas, or
- the introduction of a substream of the first drying gas in such a way that all of the first drying gas achieves vorticity, or combinations thereof.

6. Method according to any one of the preceding claims, characterized in that as a result of the radial component of the first drying gas an adjustable pressure increase is achieved which is between 0.2 and 8 times the pressure required for introducing the first drying gas if this does not have a radial velocity component.

7. Method according to any one of the preceding claims, characterized in that the inlet temperature of the first drying gas is more than 300°C, preferably more than 400°C.

8. Apparatus for implementing the method according to any one of the preceding claims, characterized in that the apparatus comprises a distribution unit for atomizing a liquid concentrate in a substantially vertical direction in an atomizing dryer section, and an inlet for feeding a first drying gas into the atomizing dryer section near the distribution unit, characterized in that the apparatus at or near the inlet is provided with means for imparting, to the first drying gas fed in, a radial velocity component oriented transverse to the vertical direction, as a result of which the first drying gas describes a spiral trajectory, so that relatively small particles which have a low velocity oriented transverse to the vertical direction are moved radially outwards.

9. Apparatus according to Claim 8, characterized in that the means comprise:
- an inlet, oriented transversely to the vertical direction, of the first drying gas, or
- a swirler unit in or near the inlet of the first drying gas, or
- a distributor for the introduction of a substream of the first drying gas in such a way that all of the first drying gas achieves vorticity, or combinations thereof.
